(19) Europäisches Patentamt

European Patent Office

Office européen des brevets

(11) **EP 2 546 598 B1**

(12) **EUROPEAN PATENT SPECIFICATION**

(45) Date of publication and mention
of the grant of the patent:
**20.11.2019 Bulletin 2019/47**

(51) Int Cl.:
***G01B 7/14*** *(2006.01)*      ***B23K 26/04*** *(2014.01)*
***G01B 7/02*** *(2006.01)*

(21) Application number: **11475502.8**

(22) Date of filing: **12.12.2011**

(54) **Method of distance evaluation of a machine tool from a workpiece**

Verfahren zur Abstandsbestimmung zwischen Werkzeugmachine und Werkstück

Procédé d'évaluation de la distance entre machine outil et pièce à usiner

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.07.2011 SK 500282011**

(43) Date of publication of application:
**16.01.2013 Bulletin 2013/03**

(73) Proprietor: **MicroStep spol. s r.o.
831 04 Bratislava (SK)**

(72) Inventor: **Kovac, Frantisek, Ing., PhD.
85101 Bratislava (SK)**

(74) Representative: **Fajnorova, Maria
Fajnor IP s.r.o.
Krasovskeho 13
851 01 Bratislava (SK)**

(56) References cited:
**US-A- 3 852 662      US-A1- 2006 261 969
US-A1- 2006 289 408      US-A1- 2008 040 940**

**Description**

Background of the invention

This invention relates to a method of distance evaluation, which can be used for a non-contact capacitive sensing of a distance, wherein the distance of a machine tool from an electrically conductive surface of a workpiece is measured. Such method of sensing is designed for the machines having the motion axis controlling the movement of a machine tool towards the surface of a workpiece equipped with an independent system of sensing the position of the machine tool, that is synchronized with the mechanical construction of the machine and therefore it is not able to measure the distance of the endpoint of the machine tool from the surface of the workpiece, which can be in general inclined, uneven or vertically offset with respect to the mechanical construction of the machine. The method of distance evaluation according to the present invention is suitable particularly for the automatic setting of the machine tool to a predetermined distance from the surface of the workpiece and for maintaining this distance at a constant value during the technological process.

Prior state of art

In the process of cutting materials by means of machine tools the automatic monitoring of the technological process parameters, which can affect the quality of the process as well as wearing of the machine tool, is of great importance. In order to maintain the high quality of cutting it is significant to keep the machine tool at a constant distance from the surface of the material to be cut. Another object of the distance evaluation is for example to prevent from occurring errors, which could lead to a failure or interruption of the cutting process, or cause collapses of the machine tool (for example due to its collision when moving either with the material to be cut, or with the cutting grade of the machine). Under the term "machine tool" there are usually meant machine tool heads of energy beam cutting machines, for example oxy-fuel torches, laser cutting heads and plasma torches.

The most popular non-contact distance sensing methods include those based on the principle of sensing capacity or inductance changes. The advantage of a capacitive sensor is that its metal sensing electrode is mechanically more resistant compared with the more sophisticated system of the inductive sensor.

The basic element of the capacitive sensor is a sensing electrode consisting of a metal plate being gripped in a holder by means of a supporting bar and an insulator as well, while the holder is fixed firmly on the machine tool and together with the machine tool are moved towards the workpiece. Capacitive sensors generally operate in such a way that the sensing electrode creates one electrode of a capacitor and the workpiece creates the second electrode of a capacitor that is part of an electrical highfrequency oscillating circuit arrangement. The frequency of the oscillating circuit is functionally dependent on capacity of the capacitor, while capacity is functionally dependent on the distance of the sensing electrode from the workpiece. The characteristic feature of the output signal of the oscillating circuit is that dependence of frequency on the measured distance is non-linear, and the relative changes of frequency in the measured range of distances are small.

There are known the methods of distance evaluation from the frequency of the oscillating circuit, using the pre-computation of the set of frequency values in the known calibration distances stored in a lookup table for interpolation, also known as an input-output measuring curve, in the memory of the data processing unit. The table values are obtained in the calibration process in the defined initial environmental factors in such a number to be able to cover reliably the measuring range of the distance. The measured and recorded input-output measuring curve is a transfer function that is inverse to the transfer function of the oscillating circuit. One of the disadvantages of using the input-output measuring curves is that they do not take into account the changes of the environmental factors occurring after the calibration and resulting into the shift and deformation of the transfer function characteristic. Thus inaccuracy of the distance evaluation increases as well as shifting the measuring range limits. Each new calibration process in which the input-output measuring curve is adapted to the new environmental factors requires the re-setting of the machine tool into several known calibration distances from the surface the workpiece. One of these calibration distances is a contact with the workpiece. This part of calibration is usually an independent process carried out at the expense of the machine working time, requiring some assistance of a machine operator or other automatic contact detection method.

Document US Patent Application 2006/289408 A1 describes the gap measurement apparatus designed for machines using laser beams as a technological tool wherein during the working process plasma can occur between the sensing electrode and the material to be cut that increases conductivity between the electrodes. The apparatus also detects a breakage of a coaxial cable. The detection device includes 2 -- 3 sources of harmonic signals which have mutually different but constant frequencies, i. e. neither depending on the measured distance nor impendancies in a measuring chain. The sum of these generated signals is used to feed the chain of impedancies that forms an impedance divider. The impedance chain is formed by the impedance of a capacitive electrode, lead-in coaxial cable, reference resistance and other parasitic impedances. The shielding of the coaxial cable is not grounded but its internal capacitance with respect to the central conductor is suppressed by the active shielding method. The detection unit measures attenuation of amplitudes of individual components of the feeding signal wherein the attenution is caused by said chain of impedances. The attenuation is non-linearly dependent on a change of distance of the sensing electrode as well as on a change of conductivity caused by plasma. Conversion of attenuation to the normal value, without influence of plasma, is carried out by using plurality of tables containing a priori measured / identified attenuation values. By this moment the whole system operates as a detector of the change of attenuation being non-linearly dependent on change of distance. The output data expressing the distance are obtained by application of linearizing exponential function (or by its tabular representation) defined by two a priori determined parameters on intermediate information.

The US Patent 3 852 662 A describes the method of measuring the distance between a target objective and variable impedance sensing means and the apparatus therefore working on the principle of measuring impedance bridge supplied with an alternating voltage source of constant frequency that is selected from the neighbourhood of resonant frequency of the oscillation circuit. The bridge circuit consists of 4 impedances, two of them are fixed (R or L or C), the third includes the impedance of the sensing electrode that is variable due to change of measured distance, the fourth one is adjustable based on the deviation of the bridge circuit from the balanced state. The adjusting circuit continuously adjusts the impedance to make the bridge circuit balanced. Another circuit measures the third remote unknown impedance by means of measurement of the fourth (adjustable) impedance. A value of the measured distance is derived from the measured value.

US Patent Application 2006/261969 A1 describes a technological tool that includes an indicating circuit which detects the correct insertion and the setting of a conical tool holder of a rotary tool in the holder of the working head. The circuit for detection of displacement consists of a sensor measuring the distance from the workpiece (for example a sensor based on the principle of eddy currents) the impedance of which together with the adjustable impedance are put into a resonance state at the defined frequency of the energizing signal. The adjustable impedance is adjusted by the adjusting circuit with respect to the impedance of the sensor so that the distance sensor works in the neighbourhood of the resonant peak, at the required sensitivity of distance sensing.

There is known the method and a device for implementing the method of setting the machine tool to the predetermined distance from a workpiece (EP 1784281, U.S. 2008/0040940) that evaluates the frequency signal of the oscillating circuit and considers the fact that environmental factors are demonstrated particularly as a change of the transfer function shift of the oscillating circuit, wherein the change of its curvature shape can be neglected. The shift is eliminated by differentiating the measured frequency with respect to the difference of the distance during the uniform motion of the machine tool to its working position. Getting into the required distance is indicated by comparing the evaluated difference with the pre-identified values of the measuring curve. The drawback of the US 2008/040940 is a complicated guidance of the technological tool to its working distance in the case when the surface of the workpiece does not overlap the whole area of the capacitive electrode, for example when technological processing is needed along the edge of the workpiece. Acceptable results can be obtained if an outer nozzle cap of the machine tool being insulated from the machine tool is used as a sensing electrode. The disadvantage of such sensor is that high accuracy of setting the machine tool to the required distance from the workpiece is only obtained when the tool is moved with constant velocity where the range of approaching velocities is limited by the possibility of accurate measurement of distance difference. Moreover, the accuracy of evaluation is inversely proportional to the distance.

The drawback of the US2008/040940 is that one or more measuring tables are used with premeasured values relating to plurality of absolute distances from the surface of material. The US2008/040940 does not provide on-line calibration without the need to know absolute distances from the surface, i. e. it does not enable to carry out a calibration between the working intervals of the technological tool during movement of the tool down to or up from its working position.

Therefore the object of the present invention is to improve the current art in such a way that the method of distance evaluation and a arrangement of the sensor for implementing the method will provide linear measuring while keeping high accuracy of measuring also under significant changes of environmental factors, easy calibration by means of using a minimum number of calibration distances, time-independent measuring without requiring a constant motion rate of the machine tool.

Summary of the invention

Improvement of the prior art can be achieved by the method of distance evaluation according to the present invention by means of using for this purpose adapted arrangement of the processing electronics according to the invention.

The invention is based on the assumption that the resonance frequency $f_m$ of the oscillating circuit, where a serial capacity circuit of a sensing electrode and a capacity circuit of the fixed capacitor are connected to its input, has the defined frequency limit values in the distance limits of the sensing electrode from the workpiece. According to the invention, in the case of such connection of the sensing electrode to the oscillating circuit, the method of distance x evaluation of the sensing electrode from the workpiece from the resonance frequency $f_m$ is characterised with the generalized linearizing function, defined by the gain $K$, the upper limit frequency $f_r$ of the oscillating circuit and the low

limit frequency $f_0$ of the oscillating circuit according to the equation (a)

$$x = K \cdot \frac{f_m - f_0}{f_r - f_m}$$

(a)

The low limit frequency $f_0$ is a parameter of a linearizing function measured in the calibration, in bypassing the electrical potential of the sensing electrode with potential of the workpiece that corresponds to the distance $x = 0$. The low limit frequency $f_0$ is a parameter that is independent of the characteristics of the sensing electrode; it only depends on the oscillating circuit characteristics. The upper limit frequency $f_r$ of the oscillating circuit is a parameter of the linearizing function to the value of which the linearizing function variable -- the upper limit frequency $f_m$ -- is asymptotically approaching by increasing distance x, up to the limit $x \rightarrow \infty$, that corresponds to zero variable component of the sensing electrode capacity towards the workpiece. That is a theoretical, final, practically immeasurable value of frequency, independent of the sensing electrode characteristics. The values of two parameters of the linearizing function, the upper limit frequency $f_r$ and gain $K$, are determined indirectly, by calculation in the calibration as solutions of the linearizing function (a) that correspond to the two successively followed calibration movements of the machine tool with applying the three frequencies $f_m$, corresponding to the beginning and the end of both relative movements.

The condition for implementing the method of distance evaluation and its advantage according to the invention is the possibility to measure the value of the low limit frequency $f_0$ corresponding to the contact of the sensing electrode with the workpiece in any position of the machine tool and so the sensing electrode from the workpiece. This characteristic is provided according to the invention by arranging the two-value selectable impedance circuit between the output of the sensing electrode and the input of the oscillating circuit. The selectable impedance circuit includes the contact controlled by the electrical signal, having its one pole connected to the input of the sensing electrode and the second pole connected to the workpiece potential. By this contact there is simulated the contact of the sensing electrode with the workpiece in the required time period of measuring. The value of the low limit frequency $f_0$ is measured in the calibration with the contact switched on in the selectable impedance circuit.

The term "balanced setting of parameters" means to set such values of parameters of the linearizing function (a) in the method of distance evaluation that the smallest deviation between the evaluated and the real distance is obtained. The balanced setting of parameters is applied for constant environmental factors. Any change of environment factors causes the change of the balanced setting of parameters and increases errors of measuring.

The term "calibration of the sensor" means correction of parameters of the linearizing function to their balanced setting.

The method of distance evaluation according to the invention is designed for the arrangement of the machine equipped with the machine tool, wherein the sensing electrode is moved together with the machine tool towards the workpiece, and the motion source is a drive device of a machine tool's motion axis. The drive device control system is connected to the data processing and control unit through a communication line and thus it can provide it with information on the lengths of the calibration movements of the machine tool.

The term "oscillating circuit" means a connection of the oscillating circuit with the sensing electrode, wherein its active surface together with the surface of the workpiece create a capacitor the variable capacity of which is involved in defining the output signal frequency of the oscillating circuit. The method of distance evaluation according to the invention is preferably implemented by means of using two types of oscillators, RC relaxation oscillator or harmonic LC oscillator. The obliged criteria of the oscillation circuit characteristics is to oscillate reliable in the range of the sensing electrode capacity, from the value of infinite capacity that corresponds to the contact of the sensing electrode with a workpiece, to a minimum capacity corresponding to the maximum measurable distance, and under all working conditions of the environment. The advantage is that with such defined range it is possible to measure all changes of the frequency caused by the change of a dielectric constant of the sensing electrode's environment and the change of the overlapping area of the sensing electrode and the workpiece. This standard of the working range of the oscillating circuit frequencies is provided by the two-value selectable impedance circuit, where a minimum frequency limiting capacitor in connection of the electrode with a workpiece is connected between the sensing electrode input and the oscillating circuit input.

The preferred modification of the evaluation method according to the equation (a) is characterized by equation (c):

$$x = \frac{K}{T_0} \cdot (T_m - T_0)$$

(c)

The equation (c) is an equivalent of the equation (a) because $T_m$ and $T_0$ are periods of oscillation of difference frequency according to the equations (d) and (e):

$$T_m = \frac{1}{f_r - f_m} \tag{d}$$

$$T_0 = \frac{1}{f_r - f_0} \tag{e}$$

The parameter $T_0$ is the period of oscillation of difference frequency when the sensing electrode gets into contact with the workpiece, and a variable $T_m$ is the period of oscillation of difference frequency at the measured distance x. According to the equation (c), the increment of the measured period $T_m$ of oscillation of difference frequency is directly proportional to the increase of the distance x, with the factor of proportionality $K / T_0$. The value of the period $T_0$ of oscillation of difference frequency is defined by measuring in the calibration with the contact switched on in a selectable impedance circuit. Other values of the balanced setting, the gain $K$ and the upper limit frequency $f_r$, are defined indirectly, by computing in the calibration as the solutions of the equation (c) for two measured differences of periods $T_m$ of oscillation of difference frequency in two known distances of two successive calibration movements of the machine tool in one direction. The advantage of the modified method according to the equation (c) is that high accuracy of measuring in the high frequency of the output measured distance updating is obtained by measuring the period $T_0$ and $T_m$ of oscillation of difference frequency.

The distance x of the sensing electrode being fixed on the machine tool is usually greater from the workpiece than the distance $x_H$ of the endpoint of the machine tool. This distance $x_0$ is called the offset of the sensing electrode and its constant value is defined in the initial calibration according to the equation (a) after the initial determination of the three parameters of balanced setting, such as the gain $K$, the low limit frequency $f_0$ and the upper limit frequency $f_r$, when the endpoint of the machine tool gets into contact with the workpiece. The initial calibration is carried out only after the initial installation on the machine tool, then after the changing of some components of the sensor or after the changing of the offset $x_0$. The distance $x_H$ of the endpoint of the machine tool from the workpiece, which is a target value of the distance evaluation, is then computed as a difference of the distance x of the sensing electrode and the offset $x_0$ according to equation (b):

$$x_H = x - x_0 \tag{b}$$

Therefore the necessary condition is to carry out the first calibration movement in the initial calibration from contacting the endpoint of the machine tool with the workpiece. Only in this case the assistance of a person or other method of setting the machine tool into contact with the workpiece is required.

The advantage is that the method of distance evaluation (working either on resonance frequency values or on the periods of oscillation of difference frequency), according to the invention, substitutes multipoint input-output measuring curves and reduces the number of calibration measuring. It is preferred that the calibration can be carried out easily due to the fact that calibration movements are part of lifting or lowering the machine tool to or from the predetermined working distance, or they can be carried out during short breaks between the working cycles of the technological process. The advantage is that the calibration movements in the re-calibration are in general relatively independent of the position of the machine tool at the beginning of the first calibration movement. Three parameters of balanced setting are defined by calibration, either the gain $K$, the low limit frequency $f_0$, the upper limit frequency $f_r$ in the distance evaluation according to the equation (a), or the gain K, the period $T_0$ of oscillation of difference frequency in contacting the sensing electrode with the workpiece, the upper limit frequency $f_r$ in the distance evaluation according to the equation (c). One of the parameters, either the low limit frequency $f_0$ in the distance evaluation according to the equation (a), or the period $T_0$ of oscillation of difference frequency in contacting the sensing electrode with the workpiece in the distance evaluation according to the equation (c) is defined by the direct measuring. The rest of the balanced setting parameters, such as the gain K and the upper limit frequency $f_r$, are defined indirectly by computing. The offset $x_0$ of the sensing electrode is identified in the initial calibration.

The object of present invention is a method of distance evaluation of a machine tool from an electrically conductive workpiece according to the independent method claim 1. A preferred embodiment is subject of the dependent claim 2.

Summary of figures

Fig. 1   Schematic view of an arrangement of distance evaluation of a machine tool from a workpiece.

Fig. 2   The course of a resonance frequency of the oscillating circuit, depending on the distance of a sensing electrode from a workpiece. The sensing electrode is connected to the oscillating circuit through the selectable impedance circuit.

Fig. 3   The course of a resonance frequency of the oscillating circuit, depending on the distance of the endpoint of a machine tool from a workpiece. The sensing electrode is connected to the oscillating circuit through a selectable impedance circuit.

Fig. 4   Schematic view of an arrangement of distance evaluation having a sensing electrode connected through the selectable impedance with implementation of the processing electronics for direct distance evaluation by using the measuring of the period of oscillation of difference frequency.

Fig. 5   Sequences of setting the machine tool in the initial calibration.

Fig. 6   Sequences of setting the machine tool in the re-calibration.

Example of the embodiment

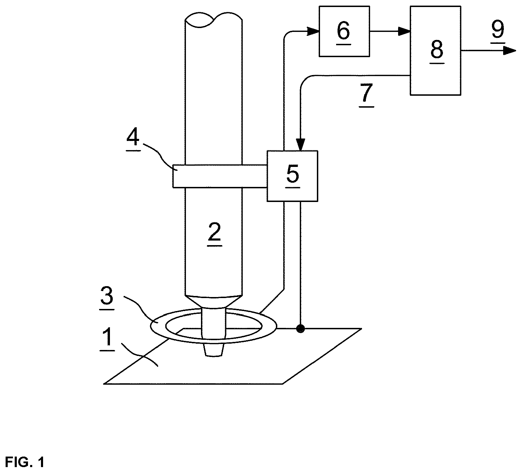

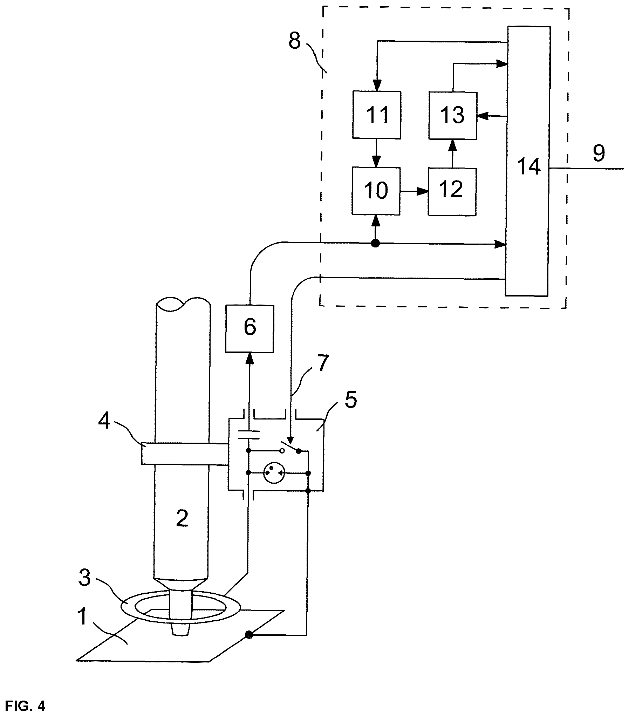

The machine tool 2, that is an oxy-fuel cutting torch (Fig. 1), designed for cutting metal plates, is provided at its end with a nozzle, from where an energy beam in the form of a focused flame is directed towards a workpiece 1. A sensing electrode 3 being electrically insulated from the other components of the machine tool 2 by means of an insular is fixed on the body of the machine tool 2 by a holder 4. The sensing electrode 3 and the machine tool 2 are moved together to the workpiece 1, wherein the source of motion is a drive device of a motion axis of the machine tool 2 that through a communication line 9 provides values of relative calibration movements of the machine tool 2 to the processing electronics 8. The sensing electrode 3 is connected to the input of the oscillating circuit 6 via a serially connected capacitor of the selectable impedance circuit 5. The selectable impedance circuit 5 also includes a contact controlled by an electrical signal 7 setting the sensing electrode 3 into contact with a workpiece 1 during the calibration, and an element of overvoltage protection connected in parallel to the controlled contact. The two-value electrical signal 7 controlling the selectable impedance circuit 5 is generated by the processing electronics 8. The processing electronics 8 in the example of the embodiment of this invention evaluates the distance by applying a linearizing function according to the equation (c), using the measuring of the period $T_m$ of oscillation of difference frequency. The arrangement of the processing electronics 8 according to Fig. 4 comprises a digital data processing and a control unit 14 based on a microprocessor that has an integrated peripheral configurable pulse counters, or by using custom circuits or gate arrays. The data processing and control unit 14 measures the frequency of the oscillating circuit 6, the output of which is connected to the first input of the unit and it measures the period of oscillation of difference frequency at the output of the integer frequency divider 13 being connected to the second input of the unit. The arrangement of the processing electronics 8 of Fig. 4 further includes a reference oscillator 11 on the base of direct or indirect digital frequency synthesis, a frequency mixer 10, a low-pass filter 12 and an adjustable integer frequency divider 13. The frequency of the reference oscillator 11 is set in every calibration by the data processing and control unit 14 to the value of a computed balanced setting parameter, such as the upper limit frequency $f_r$. The output of the oscillating circuit 6 is connected to the first input of the frequency mixer 10, and the output of the reference oscillator 11 is connected to its second input. The output signal of the frequency mixer 10 includes the difference frequency and sum components of its input frequencies. The sum components are suppressed by the low-passer filter 12, and the difference frequency signal is at the output of the filter. The frequency of the signal is lowered by the integer frequency divider 13. The adjustable dividing ratio of the frequency divider 13 is defined by the data processing and control unit and it represents the transfer gain of measuring the period of oscillation of difference frequency. Then the period $T_m$ of oscillation of difference frequency at the output of the frequency divider 13 in the highest measurable distance of the machine tool 2 from the workpiece 1 is smaller than the updating period of the output value from the processing electronics 8 on the communication line 9.

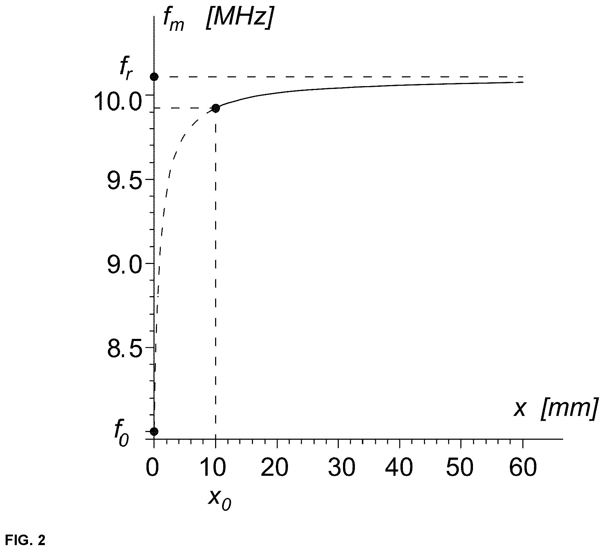

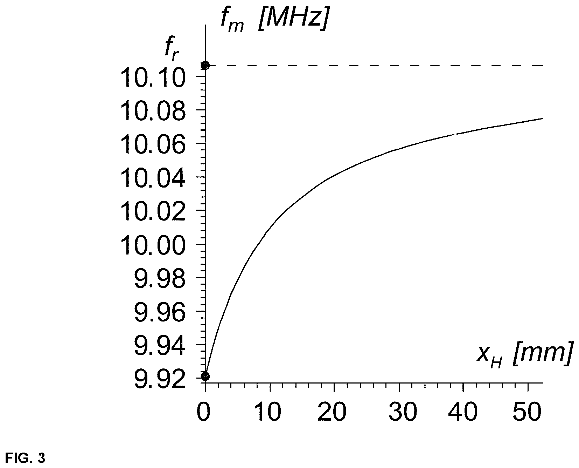

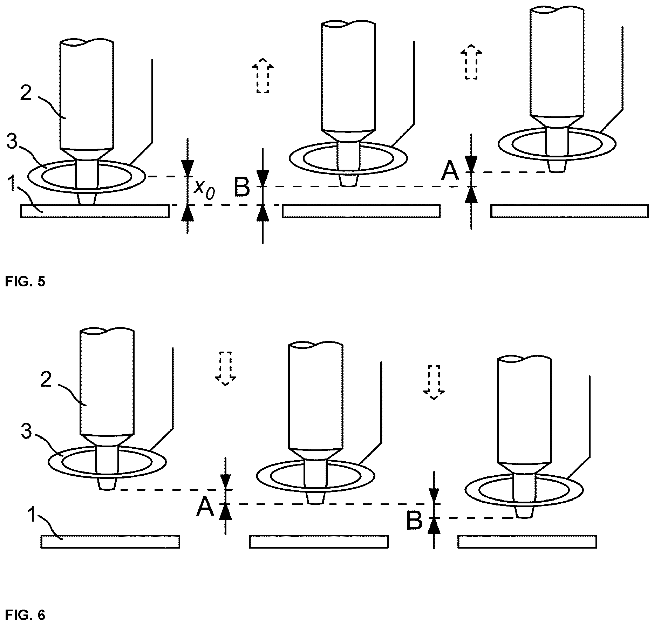

Fig. 2 illustrates the course of the resonance frequency $f_m$ of the oscillating circuit 6, depending on the distance x between the sensing electrode 3 and the workpiece 1. The course is nonlinear, characterized with the initial value, such as the low limit frequency $f_0$, and the value of the upper limit frequency $f_r$, to which the resonance frequency is asymptotically approaching by increasing distances. If the sensing electrode 3 is mounted on the machine tool 2 higher than its endpoint (Fig. 5) is, the electrode is not able to reach the distances x that are smaller than the offset $x_0$. The low limit frequency $f_0$ is therefore measured in a simulated contact by means of the contact in the selectable impedance circuit 5 being switched on. Fig. 3 shows the course of the oscillating circuit resonance frequency $f_m$, depending on the distance $x_H$ of the endpoint of the machine tool 2 from the workpiece 1.

It is preferred when after installation of the sensing electrode 3 with a holder 4 on the machine tool 2 in the upper parking distance of the machine tool 2 it is carried out an auxiliary measuring of the resonance frequency $f_m$ of the oscillating circuit 6 by the data processing and control unit 14, wherein the upper parking distance is bigger than a maximum value of the measuring range of the distance of the machine tool 2. This value of the resonance frequency $f_m$ is used as a starting value of the upper limit frequency $f_r$ for setting the reference oscillator 11, which is not yet a parameter of the balanced setting. The correction of the parameter of the upper limit frequency $f_r$ to the value of a balanced setting is carried out by the initial calibration.

Fig. 5 illustrates sequences of positions of the machine tool 2 in the initial calibration, which starts with setting the machine tool 2 to contact the workpiece 1. In this position of the machine tool 2 there is measured the first value of the period $T_m$ of oscillation of difference frequency that corresponds to the distance $x = x_0$ of the sensing electrode 3 from the workpiece 1. After the first and then the second calibration movement, the size of the first movement B and the size of the second movement A is read out by means of the communication line 9 from the superior drive control system of the machine tool 2, and also the respective periods $T_m$ of oscillation of difference frequency, which correspond to the distances $x = x_0 + B$ and $x = x_0 + B + A$. It is preferred when the lengths of both calibration movements, A and B, in the initial calibration are selected as equal, as a half of the measurement range. The values of parameters, such as the gain $K$ and the upper limit frequency $f_r$, corresponding to the balanced setting of the linearizing function (a) parameters, are calculated by the data processing and the control unit 14 as the solutions according to the equation (c), corresponding to the measured values of the period $T_m$ of oscillation of difference frequency in the known calibration movements. The final measurement in the initial calibration is the measurement of the period $T_0$ of oscillation of difference frequency in a selectable impedance circuit 5 with the contact switched on, with applying the computed parameters, such as the gain $K$ and the upper limit frequency $f_r$. Consequently the constant distance, that is the offset $x_0$, is calculated.

The correction of parameters of balanced setting after change of environmental factors is carried out by re-calibration using two calibration movements with the known values A and B, in moving the machine tool 2 towards the workpiece 1 or moving the machine tool 2 away from the workpiece 1. According to Fig. 6, the re-calibration is based on sequential reading out of three values of the period $T_m$ of oscillation of difference frequency at the beginning of each calibration movement and at the end of the second movement, wherein the movements values are read out by the data processing and control unit 14 from the superior drive control system of the machine tool 2 through the communication line 9. Similarly as in the initial calibration, the values of parameters, the gain $K$ and the upper limit frequency $f_r$ corresponding to the balanced setting of parameters of the linearizing function (c), are computed by a data processing and control unit 14 as the solutions according to the equation (c) that meet the measured values of the period $T_m$ of oscillation of difference frequency for the known calibration movements.

The measuring of the distance $x_H$ of the endpoint of the machine tool 2 to the surface of the workpiece 1 between two calibration processes is then carried out by applying the equations (c) and (b) using the parameters of balanced setting by means of the data processing and control unit 14.

## Claims

1. A method of distance evaluation of a machine tool (2) from an electrically conductive workpiece (1), wherein a capacitive sensing electrode (3) is fixed by a holder (4) on the machine tool (2), which is moved towards a workpiece (1) by a drive device, wherein a processing electronics (8) reads out a resonance frequency of an oscillating circuit (6), non-linearly dependent on the distance of the sensing electrode (3) from the workpiece (1), wherein the sensing electrode (3) is connected to the input of the oscillating circuit (6) by a selectable impedance circuit (5), wherein

   • in the initial calibration when the endpoint of the machine tool (2) touches the workpiece (1), the value of offset $x_0$ of the sensing electrode (3) to the workpiece (1) is determined; the value of the resonance frequency $f_m$ or the period $T_m$ of oscillation of difference frequency of the oscillating circuit (6) is read-out when touching the workpiece (1); and a first and then a second calibration movements are carried out in one direction with reading out the corresponding values of the resonance frequency $f_m$ or the period of oscillation $T_m$ of difference frequency of the oscillating circuit (6);
   • each readout value of the oscillating circuit (6) frequency $f_m$ is transformed into the value of the absolute distance of the sensing electrode (3) from the workpiece (1) by applying a linearizing function of the processing electronics (8), which is determined by three parameters of balanced setting, that are the gain $K$, the low limit frequency $f_0$ and the upper limit frequency $f_r$ of the oscillating circuit (6), or the gain $K$, the upper limit frequency $f_r$ of the oscillating circuit (6) and the period $T_0$ of oscillation of difference frequency, and
   • the distance of the endpoint of the machine tools (2) from the workpiece (1) is defined by the value of the absolute distance of the sensing electrode (3) from the workpiece (1) and by the offset $x_0$ of the sensing electrode (3) to the endpoint of the machine tool (2), while the offset $x_0$ is measured in the initial calibration, and

   **characterised in that**

   • in the initial calibration, the low limit frequency $f_0$ or the period $T_0$ of oscillation of difference frequency as a parameter of balanced setting of the linearizing function of the processing electronics (8) is measured in the conductive connection of the sensing electrode (3) with the workpiece (1), by means of a contact of the selectable impedance circuit (5) controlled by a two-value selected electrical signal (7), wherein the sensing electrode (3) is connected to the input of the oscillating circuit (6) via a serially connected capacitor of the selectable impedance circuit (5), wherein the selectable impedance circuit (5) includes a contact controlled by the two-value electrical signal (7) generated by the processing electronics (8) for setting the sensing electrode (3) into contact with a workpiece (1) during the calibration and an element of overvoltage protection connected in parallel to the controlled contact, wherein the output of this contact is connected to the input of the sensing electrode (3) and the second output of the contact is connected to the potential of the workpiece (1), and wherein the active state of the selectable impedance is **characterized by** a contact switched on.

2. The method according to claim 1, **characterised in that** the linearizing function of the processing electronics (8) is defined by the functional equation

$$x = K \cdot \frac{f_m - f_0}{f_r - f_m}$$

where x is the distance of the sensing electrode (3) from the workpiece (1), the variable $f_m$ is the frequency of the oscillating circuit (6) measured by the processing electronics (8), and the low frequency limit $f_0$, such as the gain $K$ and the upper limit frequency $f_r$, are the parameters of balanced setting of the linearizing function, the values of parameters are defined in the calibration, wherein the low limit frequency $f_0$ is the frequency of the oscillating circuit (6) measured in the calibration with the contact of the two-value selectable impedance circuit (5) being switched on, the parameters, such as the gain $K$ and the upper limit frequency $f_r$ of the linearizing function, are the values that meet the two known values of successive calibration movements in one direction which are read out from the communication line (9) and three frequencies $f_m$ of the oscillating circuit (6) measured at the beginning and the end of both movements
or

$$x = \frac{K}{T_0} \cdot (T_m - T_0)$$

where $x$ is the distance of the sensing the electrode (3) from the workpiece (1), $T_m$ is the measured period of oscillation of difference frequency, wherein the difference frequency is created by frequency defined by the parameter $f_r$ and the frequency $f_m$ of the oscillating circuit (6), the period $T_0$ of oscillation of difference frequency, the gain $K$ and the upper limit frequency $f_r$, are parameters of the balanced setting, the values of which are defined in the calibration, wherein the parameter $T_0$ is the period of oscillation of difference frequency measured in the calibration with the contact of the two-value selectable impedance circuit (5) being switched on, the parameters such as the gain $K$ and the upper limit frequency $f_r$, are the calculated values corresponding to the two known values of successive calibration movements in one direction, that are read out from the communication line (9), and the three resonance frequencies $f_m$ of the oscillating circuit (6) measured at the beginning and at the end of both movements.

**Patentansprüche**

1. Verfahren zur Beurteilung des Abstands eines Maschinenwerkzeugs (2) von einem elektrisch leitenden Werkstück (1), wobei eine kapazitive Messelektrode (3) durch eine Halteeinrichtung (4) am Maschinenwerkzeug (2) befestigt ist, das durch eine Antriebsvorrichtung in Richtung eines Werkstücks (1) bewegt wird, wobei eine Verarbeitungselektronik (8) eine Resonanzfrequenz eines Schwingkreises (6) ausliest, die vom Abstand der Messelektrode (3) vom Werkstück (1) nichtlinear abhängt, wobei die Messelektrode (3) durch eine auswählbare Impedanzschaltung (5) mit dem Eingang des Schwingkreises (6) verbunden ist, wobei

• bei der anfänglichen Kalibrierung, wenn der Endpunkt des Maschinenwerkzeugs (2) das Werkstück (1) berührt, der Wert des Offsets $x_0$ der Messelektrode (3) zum Werkstück (1) bestimmt wird; der Wert der Resonanzfrequenz $f_m$ oder der Schwingungsperiode $T_m$ der Differenzfrequenz des Schwingkreises (6) bei Berührung des Werkstücks (1) ausgelesen wird; und eine erste und dann eine zweite Kalibrierbewegung in einer Richtung bei Auslesen der entsprechenden Werte der Resonanzfrequenz $f_m$ oder der Schwingungsperiode $T_m$ der Differenzfrequenz des Schwingkreises (6) durchgeführt werden;

• die Frequenz $f_m$ jeden ausgelesenen Wert des Schwingkreises (6) durch Anwenden einer Linearisierungsfunktion der Verarbeitungselektronik (8) in den Wert des absoluten Abstands der Messelektrode (3) vom Werkstück (1) umgewandelt wird, der durch drei Symmetrieeinstellungsparameter bestimmt wird, wobei es sich um die Verstärkung K, die untere Grenzfrequenz $f_0$ und die obere Grenzfrequenz $f_r$ des Schwingkreises (6) oder die Verstärkung K, die obere Grenzfrequenz $f_r$ des Schwingkreises (6) und die Schwingungsperiode $T_0$ der Differenzfrequenz handelt, und

• der Abstand des Endpunkts der Maschinenwerkzeuge (2) vom Werkstück (1) durch den Wert des absoluten Abstands der Messelektrode (3) vom Werkstück (1) und durch den Offset $x_0$ der Messelektrode (3) zum Endpunkt des Maschinenwerkzeugs (2) definiert wird, während der Offset $x_0$ bei der anfänglichen Kalibrierung gemessen wird, und

**dadurch gekennzeichnet, dass**

• bei der anfänglichen Kalibrierung die untere Grenzfrequenz $f_0$ oder die Schwingungsperiode $T_0$ der Differenzfrequenz als ein Symmetrieeinstellungsparameter der Linearisierungsfunktion der Verarbeitungselektronik (8) mittels eines Kontakts der auswählbaren Impedanzschaltung (5), der durch ein zweiwertiges ausgewähltes elektrisches Signal (7) gesteuert wird, in der leitenden Verbindung der Messelektrode (3) mit dem Werkstück (1) gemessen wird, wobei

die Messelektrode (3) über einen in Reihe geschalteten Kondensator der auswählbaren Impedanzschaltung (5) mit dem Eingang des Schwingkreises (6) verbunden ist, wobei die auswählbare Impedanzschaltung (5) einen Kontakt, der durch das zweiwertige elektrische Signal (7) gesteuert wird, das durch die Verarbeitungselektronik (8) erzeugt wird, zum Versetzen der Messelektrode (3) in Kontakt mit einem Werkstück (1) während der Kalibrierung und ein zum gesteuerten Kontakt parallel geschaltetes Überspannungsschutzelement umfasst, wobei der Ausgang dieses Kontakts mit dem Eingang der Messelektrode (3) verbunden ist, und der zweite Ausgang des Kontakts mit dem Potenzial des Werkstücks (1) verbunden ist, und wobei der aktive Zustand der auswählbaren Impedanz **dadurch gekennzeichnet, dass** ein Kontakt eingeschaltet wird.

2. Verfahren nach Anspruch 1, **dadurch gekennzeichnet, dass** die Linearisierungsfunktion der Verarbeitungselektronik (8) durch die folgende Funktionsgleichung definiert wird:

$$x = K \cdot \frac{f_m - f_0}{f_r - f_m}$$

wobei x der Abstand der Messelektrode (3) vom Werkstück (1) ist, die Variable $f_m$ die Frequenz des Schwingkreises (6) ist, die von der Verarbeitungselektronik (8) gemessen wird, und die untere Grenzfrequenz $f_0$ sowie die Verstärkung K und die obere Grenzfrequenz $f_r$ die Symmetrieeinstellungsparameter der Linearisierungsfunktion sind, wobei die Werte von Parametern bei der Kalibrierung definiert werden, wobei die untere Grenzfrequenz $f_0$ die Frequenz des Schwingkreises (6) ist, die bei der Kalibrierung bei Einschalten des Kontakts der auswählbaren Impedanzschaltung (5) mit zwei Werten gemessen wird, wobei die Parameter wie beispielsweise die Verstärkung K und die obere Grenzfrequenz $f_r$ der Linearisierungsfunktion die Werte sind, die den zwei bekannten Werten von sukzessiven Kalibrierbewegungen in einer Richtung, die aus der Kommunikationsleitung (9) ausgelesen werden, und drei Frequenzen $f_m$ des Schwingkreises (6) entsprechen, die zu Beginn und am Ende beider Bewegungen gemessen werden, oder

$$x = \frac{K}{T_0} \cdot (T_m - T_0)$$

wobei $x$ der Abstand der Messelektrode (3) vom Werkstück (1) ist, $T_m$ die gemessene Schwingungsperiode der Differenzfrequenz ist, wobei die Differenzfrequenz durch eine Frequenz, die durch den Parameter $f_r$ definiert wird, und die Frequenz $f_m$ des Schwingkreises (6) gebildet wird, die Schwingungsperiode $T_0$ der Differenzfrequenz, die Verstärkung K und die obere Grenzfrequenz $f_r$ die Symmetrieeinstellungsparameter sind, deren Werte bei der Kalibrierung definiert werden, wobei der Parameter $T_0$ die Schwingungsperiode der Differenzfrequenz ist, die bei der Kalibrierung bei eingeschaltetem Kontakt der auswählbaren Impedanzschaltung (5) mit zwei Werten gemessen wird, wobei die Parameter wie beispielsweise die Verstärkung K und die obere Grenzfrequenz $f_r$ die berechneten Werte sind, die den zwei bekannten Werten von sukzessiven Kalibrierbewegungen in einer Richtung, die aus der Kommunikationsleitung (9) ausgelesen werden, und den drei Frequenzen $f_m$ des Schwingkreises (6) entsprechen, die zu Beginn und am Ende beider Bewegungen gemessen werden.

**Revendications**

**1.** Procédé d'évaluation de distance d'une machine-outil (2) par rapport à une pièce électriquement conductrice (1), dans lequel une électrode de détection capacitive (3) est fixée par un support (4) sur la machine-outil (2), qui est déplacée vers une pièce (1) par un dispositif d'entraînement, dans lequel une électronique de traitement (8) lit une fréquence de résonance d'un circuit oscillant (6), qui dépend non-linéairement de la distance de l'électrode de détection (3) par rapport à la pièce (1), dans lequel l'électrode de détection (3) est connectée à l'entrée du circuit oscillant (6) par un circuit à impédance sélectionnable (5), dans lequel

• lors de l'étalonnage initial lorsque le point d'extrémité de la machine-outil (2) touche la pièce (1), la valeur de décalage $x_0$ de l'électrode de détection (3) à la pièce (1) est déterminée ; la valeur de la fréquence de résonance $f_m$ ou de la période d'oscillation $T_m$ de la fréquence de différence du circuit oscillant (6) est lue lors du contact avec la pièce (1) ; et un premier et ensuite un deuxième déplacement d'étalonnage sont effectués dans une direction avec la lecture des valeurs correspondantes de la fréquence de résonance $f_m$ ou de la période d'oscillation $T_m$ de la fréquence de différence du circuit oscillant (6);
• chaque valeur de lecture de la fréquence $f_m$ du circuit oscillant (6) est transformée en la valeur de la distance absolue de l'électrode de détection (3) par rapport à la pièce (1) en appliquant une fonction de linéarisation de l'électronique de traitement (8), qui est déterminée par trois paramètres d'un paramétrage équilibré, qui sont le gain K, la fréquence de limite basse $f_0$ et la fréquence de limite supérieure $f_r$ du circuit oscillant (6), ou le gain K, la fréquence de limite supérieure $f_r$ du circuit oscillant (6) et la période d'oscillation $T_0$ de la fréquence de différence, et
• la distance du point d'extrémité de la machine-outil (2) par rapport à la pièce (1) est définie par la valeur de la distance absolue de l'électrode de détection (3) par rapport à la pièce (1) et par le décalage $x_0$ de l'électrode de détection (3) au point d'extrémité de la machine-outil (2), alors que le décalage $x_0$ est mesuré lors de l'étalonnage initial, et

**caractérisé en ce que**

• lors de l'étalonnage initial, la fréquence de limite basse $f_0$ ou la période d'oscillation $T_0$ de la fréquence de différence en tant que paramètre d'un paramétrage équilibré de la fonction de linéarisation de l'électronique de traitement (8) est mesurée lors de la connexion conductrice entre l'électrode de détection (3) et la pièce (1), au moyen d'un contact du circuit à impédance sélectionnable (5) commandé par un signal électrique sélectionné à deux valeurs (7), dans lequel l'électrode de détection (3) est connectée à l'entrée du circuit oscillant (6) par l'intermédiaire d'un condensateur connecté en série du circuit à impédance sélectionnable (5), dans lequel le circuit à impédance sélectionnable (5) comprend un contact commandé par le signal électrique à deux valeurs (7) généré par l'électronique de traitement (8) pour mettre l'électrode de détection (3) en contact avec une pièce (1) pendant l'étalonnage et un élément de protection contre les surtensions connecté en parallèle avec le contact commandé, dans lequel la sortie de ce contact est connectée à l'entrée de l'électrode de détection (3) et la deuxième sortie du contact est connectée au potentiel de la pièce (1), et dans lequel l'état actif de l'impédance sélectionnable est **caractérisé par** un contact fermé.

**2.** Procédé selon la revendication 1, **caractérisé en ce que** la fonction de linéarisation de l'électronique de traitement (8) est définie par l'équation fonctionnelle

$$x = K \cdot \frac{f_m - f_0}{f_r - f_m}$$

où x est la distance de l'électrode de détection (3) par rapport à la pièce (1), la variable $f_m$ est la fréquence du circuit oscillant (6) mesurée par l'électronique de traitement (8), et la fréquence de limite basse $f_0$, telle que le gain K et la fréquence de limite supérieure $f_r$, sont les paramètres d'un paramétrage équilibré de la fonction de linéarisation, les valeurs des paramètres sont définies lors de l'étalonnage, dans lequel la fréquence de limite basse $f_0$ est la fréquence du circuit oscillant (6) mesurée lors l'étalonnage avec le contact du circuit à impédance sélectionnable à deux valeurs (5) en position fermée, les paramètres, tels que le gain K et la fréquence de limite supérieure $f_r$ de la fonction de linéarisation, sont les valeurs qui satisfont aux deux valeurs connues des déplacements d'étalonnage successifs dans une direction qui sont lues à partir de la ligne de communication (9) et trois fréquences $f_m$ du circuit oscillant (6) mesurées au début et à la fin des deux déplacements ou

$$x = \frac{K}{T_0} \cdot (T_m - T_0)$$

où x est la distance de l'électrode de détection (3) par rapport à la pièce (1), $T_m$ est la période mesurée d'une oscillation de la fréquence de différence, dans lequel la fréquence de différence est créée par la fréquence définie par le paramètre $f_r$ et la fréquence $f_m$ du circuit oscillant (6), la période d'oscillation $T_0$ de la fréquence de différence, le gain K et la fréquence de limite supérieure $f_r$, sont les paramètres d'un paramétrage équilibré, dont les valeurs sont définies lors de l'étalonnage, dans lequel le paramètre $T_0$ est la période d'oscillation de la fréquence de différence mesurée lors l'étalonnage avec le contact du circuit à impédance sélectionnable à deux valeurs (5) en position fermée, les paramètres tels que le gain K et la fréquence de limite supérieure $f_r$, sont les valeurs calculées correspondant aux deux valeurs connues des déplacements d'étalonnage successifs dans une direction, qui sont lues à partir de la ligne de communication (9), et les trois fréquences de résonance $f_m$ du circuit oscillant (6) mesurées au début et à la fin des deux déplacements.

**FIG. 1**

FIG. 2

FIG. 3

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006289408 A1
- US 3852662 A
- US 2006261969 A1

- EP 1784281 A
- US 20080040940 A
- US 2008040940 A